# EUROPEAN PATENT SPECIFICATION

(11) **EP 0 982 198 B1**
(45) Date of publication and mention of the grant of the patent: **23.04.2003**
(21) Application number: 99116713.1
(22) Date of filing: 26.08.1999
(51) Int. Cl.: B60R 21/26, B60R 21/28

(54) **Airbag module with a gas distributor**
Luftsackmodul mit einem Gasverteiler
Module de coussin gonflable comportant un distributeur de gaz

(30) Priority: 28.08.1998 DE 19839283
(43) Date of publication of application: 01.03.2000
(73) Proprietor: Breed Automotive Technology, Inc., Lakeland, FL 33807-3050 (US)
(72) Inventor: Ross, Hubert, 61440 Oberursel (DE)
(74) Representative: Müller-Boré & Partner Patentanwälte

(56) References cited:
- EP-A- 0 814 000
- WO-A-97/26160
- WO-A-98/31570
- DE-A- 19 725 418
- US-A- 5 707 078

## Description

The invention relates to an airbag module with a gas distributor.

Intelligent restraining systems or airbag systems for motor vehicles in which various sensors are used to determine whether a vehicle occupant is located directly in the region where the airbag shoots out or unfolds have been under development for some time. When the airbag shoots out or unfolds, the quantity of the gas flowing into the airbag will be reduced as much as possible, in order to avoid any injuries owing to the airbag. To date, multistage gas generators have been used predominantly to set the quantity of the gas flowing into the airbag. In these multistage gas generators, the total quantity of propellant is subdivided into a plurality of units which are detonated either all at the same time or with a time offset, or of which only individual units are detonated. In the case of so-called hybrid gas generators, the detonation of only one stage ensures that the entire compressed gas already flows into the airbag. The detonation of a second or further stages then leads only to a rise in temperature and thus a rise in pressure of the gas, but increases the mass of gas only insignificantly. However, the mass of gas exerts a substantial influence on the energy of the unfolding airbag, and is therefore also attended by a possible risk of injury to a vehicle occupant from the airbag.

These two-stage gas generators used to date are of very complicated construction, with the result that these gas generators also entail increased production costs. Furthermore, particularly in the case of the hybrid gas generators, it is difficult to reduce the mass of the gas flowing into the airbag, should this be desired.

Also known are airbag modules in which gas distribution devices are arranged on the gas generator. These gas distribution devices provide outflow openings which are sealed by means of flaps. These flaps can be opened if appropriate, with the result that some of the gas flows off not into the airbag, but into the environment through the outflow openings. The mass of the gas flowing into the airbag can therefore be reduced. However, such a gas distribution device permits only indirect, and thus imprecise setting of the mass of gas flowing into the airbag. Furthermore, the mass of gas flowing into the airbag can be reduced by this device only to a specific value, a further reduction beyond this value being impossible.

US-A-5 707 078 discloses an airbag module with a gas generator provided with a gas distributor including a valve arrangement, which allows the interruption of a gas flow from the gas generator into the airbag and, at the same time, the opening of an outflow opening so as to let the gas from the gas generator no longer being able to flow into the airbag flow into the environment. Said valve arrangement is disposed laterally of the gas generator and comprises a linearly movable slide or a rotatable sleeve entirely surrounding the gas generator, provided with openings, which, in response to the position of the sleeve or the slide, can be brought to coincidence with corresponding openings in the housing surrounding the gas generator, so that corresponding flow paths are opened. Said valve arrangement and the entire gas distributor require, a large construction space as they fully surround the gas generator.

In the words of claim 1 US 5707078 A discloses (see figures 1 and 2) an airbag module with a gas distributor (12) arranged annularly around a gas outlet device of a gas generator (24), in which at least a first (38) and a second (40) flow path for a gas are provided in the gas distributor (12),
the first flow path (38) connects the gas generator (24) to an airbag, the second flow path (40) is not connected to the airbag,
the gas distributor (12) being arranged concentrically with the gas outlet device, and comprising an arcuate, movable valve slide (42),
and the flow paths (38,40) being constructed as openings which extend transverse to the direction of movement of the slide (42).

WO 9831570A discloses an air bag module with an inflator and the airbag arranged in a box-like housing. The housing has vent openings covered by a movable member. The member is movable relative to the vent openings for opening and closing the vent openings to control the amount of inflator gas discharged into the airbag and the amount of inflator gas expelled out of the housing.

WO 9726160 discloses an airbag module with a rotary and a stationary sleeve body having openings arranged on top of an inflator. A relative movement between the rotary and the stationary sleeve allows a controlled gas discharge from the inflator into the airbag and a gas discharge into the environment.

EP 814 000 A discloses an airbag module with a valve arrangement capable of interrupting a flow path from a gas generator to an airbag and of simultaneously opening a ventilation opening connected to the airbag, so as to prevent the pressure in the airbag from exceeding a predetermined value. Said arrangement, however, involves problems, especially when being used with a pyrotechnic gas generator, as, while the flow paths between the gas generator and the airbag are closed, a safe diversion of the gas continued to be produced by the gas generator cannot be guaranteed, which may result in an undesired high pressure in the gas generator.

It is the object of the invention to provide an improved airbag module with a gas distributor allowing an exact adjustment of the gas volume entering the airbag by discharging unnecessary amounts of gas into the environment as well as flow resistances as small as possible, and incorporating a compact gas distributor construction.

The object is provided by an airbag module with a gas distributor arranged between a gas generator and an airbag according to the features claimed in claim 1. Advantageous embodiments can be inferred from the subclaims.

In the airbag module according to the invention, a gas distributor is arranged between a gas generator and an airbag. The gas distributor has at least a first and a second flow path for a gas. At least one valve device for opening or closing the respective flow path is arranged in each case in the flow paths. In this case, the first flow path connects the gas generator to the airbag, while the second flow path is not connected to the airbag. Because of this arrangement, it is possible, by appropriately driving or setting the valve devices, for the gas generated by the gas generator to be introduced specifically into the airbag through the first flow path, or to be led off from the airbag through the second flow path. Thus, it is possible on the one hand for a superfluous quantity of gas which is not required to fill the airbag or, because of a specific position of a vehicle occupant, is not desired to be led off via the second flow path so that it does not flow into the airbag. It is also possible to reduce the cross section of the first flow path by means of a valve device located therein, and thus to reduce the quantity and/or mass of the gas flowing into the airbag. When the valve device in the first flow path is completely closed, it is possible virtually entirely to prevent gas flowing into the airbag. Depending on the configuration of the valve device, it is then only a residual quantity of gas which flows into the airbag. As a rule, this residual quantity cannot be avoided, since no sealing means which could seal completely are provided on the valve devices used here. However, such a residual quantity of gas, for example 20% of the normal quantity which flows into the airbag, is insignificant, since it cannot fill the airbag to such an extent that the latter can pose a risk of injury to a vehicle occupant.

The valve devices of the first and the second flow paths have at least one common, movable slide, it being the case that the first flow path is open and the second flow path is closed in a first position of the slide, and the first flow path is closed and the second flow path is open in a second position of the slide. When, for example, the vehicle occupant is located too close to the airbag module, this embodiment renders it possible for the airbag to be blown up only slightly or virtually not at all by virtue of the fact that the first flow path, which connects the gas generator to the airbag, is closed. The fact that a common slide simultaneously opens the second flow path correspondingly renders it possible to ensure that the quantity of gas not required to fill the airbag is reliably led off through the second flow path, with the result that no undesired or impermissible overpressure can be produced in the gas generator or the gas distributor.

The slide is arcuate and guided in an annular channel which is arranged concentrically with a gas outlet device of a gas generator, and the flow paths are constructed as openings which extend transverse to the direction of movement of the slide through the annular channel. An exceptionally compact configuration of the gas distributor can be achieved in this way. Thus, the gas distributor can be arranged annularly around a gas outlet device of a known gas generator without the need for additional modifications to the gas generator. The gas distributor thereby only surrounds the region of the gas generator, in which the gas outlet device is arranged in the form of gas outlet openings. The gas generator is preferably tubular, wherein gas outlet openings are arranged at one end along the circumference of the gas generator, which allow the gas to flow out essentially radially. The slide can move in the annular channel transverse to a flow direction of the gas flowing through the openings, and seal or clear the corresponding openings. Given an annular construction of the gas distributor, whereby an arcuate slide is moved in an annular channel, the openings forming the flow paths out of the gas distributor thus extend in radial direction so as to allow gas radially flowing out of a gas outlet device of a gas generator to flow radially out of the gas distributor without any further deviation.Thus the flow resistance is minimized and the filling of the airbag is accelerated. The openings preferably extend approximately over the total circumference of the annular channel between two guiding devices parallel to each other, in which the slide is guided along its lateral edges. Thus the size of the openings is maximized for a gas flow through the gas distributor, and the flow resistance in the gas distributor is further minimized.

The second flow path advantageously connects the gas generator to at least one outflow opening. This outflow opening is advantageously arranged such that the outflowing gas flows away from the vehicle occupant. In the case of a driver's or passenger's airbag, such an outflow opening is therefore preferably positioned such that the gas flowing out through it is led off into the dashboard of the motor vehicle. Thus, a superfluous quantity of gas, which is not required in a specific case to fill the airbag because the latter is not to be completely filled owing to a specific position of the vehicle occupant to be protected, can be safely led off without the risk of injury to the vehicle occupant from hot gas which is led off into the environment.

The valve devices are preferably coupled in such a way that the total flow cross section of the flow paths remains constant in each position of the valve devices. It can be ensured in this way that when one of the valve devices is being closed the total flow cross section through which the gas generated by the gas generator can flow off is not reduced to such an extent as to cause an impermissible increase in the gas pressure in the gas generator or the gas distributor which could lead to their destruction or explosion, which would constitute a substantial risk of injury to vehicle occupants. Given appropriate coupling of the valve devices, it can be ensured that when one valve device reduces the cross section of a flow path, the other valve device simultaneously enlarges the cross section of the other flow path by the same amount so that the total flow cross section remains essentially constant, and actuating the valve devices cannot lead to an increase in the internal pressure in the gas generator and in the gas distributor.

It is preferred to provide at least one explosive propellant charge for actuating the valve devices. Such a propellant charge comprises, for example, a detonating pill which, like the gas generator as well, can be detonated electrically by an appropriate control device. The propellant charge then abruptly generates a specific quantity of gas which, for example, can drive in the valve device a piston which actuates the latter to change the flow cross section in the appropriate flow path. The actuation of the valve devices by propellant charges has the advantage of permitting an exceptionally rapid actuation of the valve devices such as is required in the case of an airbag module whose airbag is blown up in the region of milliseconds. In a way that is also preferred, the propellant charges actuate the valve devices in such a way that the latter virtually completely seal or completely open the appropriate flow path. Absolutely tight sealing of the flow paths is mostly not necessary, and so it is possible to do without expensive seals. It is expedient to provide locking means for locking the valve devices in predetermined valve positions. These locking means permit the valve devices to be fixed in their end positions so that they cannot move back unintentionally, for example because of vibrations which are acting on the airbag module, something which could lead to re-release or resealing of the corresponding flow path, and thus to malfunctioning of the airbag module. The locking means are preferably constructed in the form of latching or clamping means which reliably retain the valve devices in the appropriate positions.

It is preferred for a propellant charge to be arranged in such a way that the slide can be moved from its first into its second position by detonating the propellant charge. When the propellant charge is detonated, a pressure is abruptly produced which abruptly moves the slide from its first position into the second. An extremely fast movement of the slide is thereby possible, with the result that the quantity of gas flowing into the airbag before the closure of the first flow path can be kept low.

The slide is preferably guided in a sliding fashion in a guiding device, and the guiding device advantageously comprises locking means for locking the slide in the region of the second position of the slide. In this way, a reliable and specific movement of the slide is rendered possible without jamming or tilting, with the result that malfunctioning of the valve devices can be prevented. The slide is preferably guided only in the region of its lateral edges in respective guiding devices, wherein the two guiding devices extend parallel to each other. A space configured to form a flow passage and partially closed in response to the position of the slide extends between the two guiding devices preferably over approximately the total length thereof. The locking means retain the slide in the second position, in which the first flow path is closed, so that it cannot move back and inadvertently clear the first flow path again, something which would lead to undesired further filling of the airbag.

In a further embodiment, two first and two second flow passages and two slides are arranged, it being possible for the two slides to be moved, preferably independently of one another, in order in each case to close a first flow path and simultaneously to open a second flow path. This means that there are two flow paths which connect the gas generator to the airbag. Furthermore, corresponding to each of these first flow paths is a corresponding second flow path which, if appropriate, serves to lead off a quantity of gas not required to fill the airbag. Preferably, the two flow paths which connect the gas generator to the airbag can be sealed independently of one another by a separate slide in each case. This results in further possibilities for setting and/or controlling when filling the airbag. For example, the two first flow paths can be open so that the airbag is filled completely, but it is also possible for one or both of the first flow paths to be sealed so that the airbag is filled only partially or virtually not at all. It is also preferred that in this case the two first flow paths can have different cross sections so that, depending on which of the two flow passages is sealed by a slide, it is possible to set a different filling strength for the airbag. At the same time, however, each slide opens the associated second flow path, thus ensuring that the quantity of gas which does not flow into the airbag through a first flow path is led off reliably through a corresponding second flow path. It is expedient for this purpose for the second flow path associated with a first flow path to have the same cross section as the first flow path so as to ensure that the quantity or mass of gas not required is led off completely and there is no impermissible increase in the internal pressure of the gas distributor or of the gas generator. The invention is not limited to the number of flow paths described here, rather it is also possible to arrange more flow paths, the flow paths advantageously being configured such tha upon actuation of the valve devices the total flow cross section always remains essentially constant.

Expediently, at least one detonator housing, connected to the annular channel, for holding at least one propellant charge is arranged on the annular channel behind the slide in the direction of movement. In this way, an appropriate propellant charge for moving the slide can be arranged directly on the annular channel, with the result that a shockwave produced upon detonation of the propellant charge enters the annular channel directly and accelerates or moves like a piston the slide guided there.

The second flow path can connect the gas generator to a further airbag. In this arrangement, the gas distributor can be used to fill different airbags by one and the same gas generator, for example depending on the position of a vehicle occupant. The gas distributor switches over between appropriate flow paths which connect the gas generator to different airbags.

Preferred embodiments of the invention are described below with the aid of attached drawings, in which:
Figure 1 shows a section along a line A-A in Figure 2, through a gas distributor according to the invention and arranged on a gas generator,
Figure 2 shows a cross section through the gas distributor shown in Figure 1, and
Figure 3 shows a section along the line B-B in Figure 2.

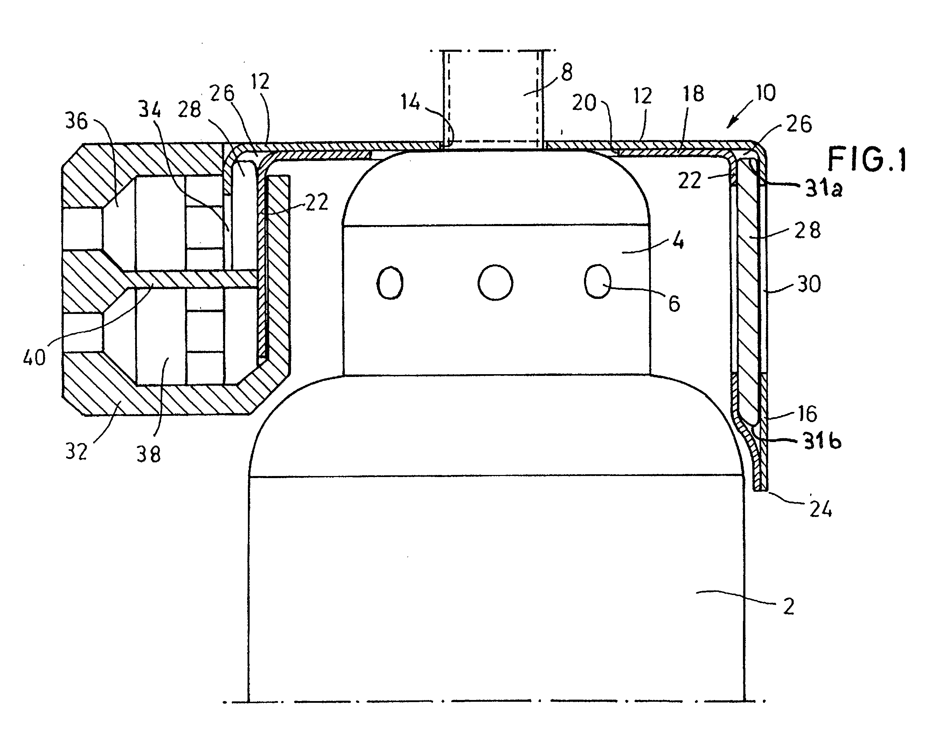

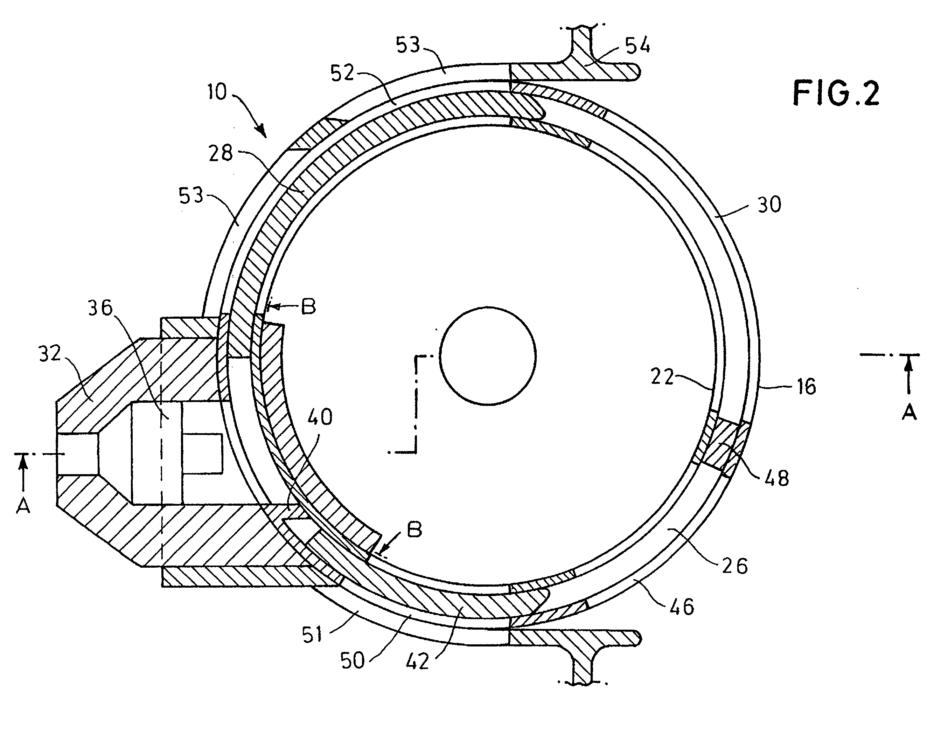

Figure 1 shows a section through a preferred embodiment of a gas distributor for the airbag module according to the invention. The gas generator 2 corresponds to a known tubular gas generator, and has at one longitudinal end a gas outlet device 4 with appropriate outlet openings 6, which are arranged over the circumference of the gas generator so that the gas generated by the gas generator flows out in a radial direction. Projecting on the end face of the gas outlet device 4 of the gas generator 2 is a fastening bolt 8, preferably in the form of a threaded bolt, which serves both to fasten the gas generator 2 to a support structure on the vehicle side, and to fasten the gas distributor 10 to the gas generator 2. The gas distributor 10 comprises a first cup-shaped element 12 with a circular base face, which has in its bottom a through-hole 14 through which the bolt 8 extends. An annular side wall 16 extends essentially perpendicular to and starting from the bottom of the cup-shaped element 12. The cup-shaped element 12 is mounted on the bolt 8 and the gas generator 2 so that the side wall 16 surrounds the gas outlet device 4. A second cup-shaped element 18 is arranged inside the first cup-shaped element 12. The element 18 bears with its bottom against the inside of the bottom of the first cup-shaped element 12. In this arrangement, the bottom 18 likewise has in its middle a hole 20 which is arranged concentrically with the through-hole 14 in the first cup-shaped element 12, but is larger, with the result that the gas outlet device 4 bears with its end face against the bottom of the first cup-shaped element 12. The second cup-shaped element 18 is connected permanently to the first cup-shaped element 12, for example by welding. Thus, the two elements 12, 18 can then be jointly fastened permanently to the gas outlet device 4 of the gas generator 2 by means of a nut screwed onto the bolt 8. The second cup-shaped element 18 has a smaller diameter than the first cup-shaped element 12, with the result that a spacing is formed between the side wall 16 of the first cup-shaped element 12 and the side wall 22 of the second element 18. The side walls 16 and 22 extend in this case essentially parallel to one another from the bottoms of the elements 12 and 18 to a free edge 24. Near the free edge 24, the side wall 22 is shaped such that it approaches the side wall 16 and is permanently connected, for example by welding, to the side wall 16, preferably in the region of the free edge 24. This produces between the first cup-shaped element 12 and the second cup-shaped element 18 an annular channel 26 in which an appropriately bent slide 28 is movably arranged. Furthermore, openings 30 are provided in the gas distributor 10, that is to say in the side walls 16 and 22. Provided both in the side wall 16 and in the side wall 22 for this purpose are openings which are situated opposite one another and thus form a continuous opening 30 which extends transverse to the annular channel 26. The opening 30 and additional openings formed in the annular channel 26, which are explained below by means of Figure 2, preferably extend approximately over the total height of the annual channel, in other words from the bottoms of the cup-shaped elements 12, 18 to the free edge 24. The side walls 16 and 22 merely form narrow webs in the region of the bottoms and the free edge 24, between which the slide 28 is guided along its lateral edges 31a, 31b. Moreover, the opening 30 and the additional openings in the annular channel 26 extend approximately over the total circumference of the gas distributor. The side walls 16, 20 preferably extend merely as narrow connecting webs between the narrow webs along the lateral edges of the slide by only limiting the flow passage by a minimum extend. Nearly the total surface of the side walls 16, 20 thereby serves as flow passage so that the flow resistance of the gas distributor is minimized. The slide 28 can move in the annular channel 26 such that it seals or clears the opening 30. Two different positions of the slide 28 are shown on the right and left in Figure 1. In Figure 1, the slide 28 is located on the right in a position in which it seals the opening 30. By contrast, shown on the left in Figure 1 is the initial position, described later, of the slide 28, in which the opening 30 is open (not shown in Figure 1). The slide is advantageously also guided above and below the opening 30 between the side walls 22 and 16. A detonator housing 32 is arranged on the side walls 16, 22 on another side or at another point of the gas distributor 10. At this point, the detonator housing 32 embraces the two side walls 16, 22 with the annular channel 26 situated therebetween. In this case, the detonator housing 32 is preferably fastened to the first cup-shaped element 12 and/or the second cup-shaped element 18, for example by welding. At the point at which the detonator housing 32 embraces the side walls 16, 22, the outer side wall, that is to say the side wall 16 of the first cup-shaped element 12, has a cut-out 34 which connects the annular channel 26 to the interior of the detonator housing 32 which completely surrounds the cut-out 34. Constructed in the detonator housing 32 are two chambers 36 and 38 which are situated opposite the cut-out 34 in the side wall 16 and thus are connected to the annular channel 26. The two chambers 36 and 38 are separated from one another by a wall 40, the wall 40 projecting so far into the annular channel 26 that it comes into contact with the outside of the side wall 22 of the second, that is to say inner, cup-shaped element, which is arranged inside the cup-shaped element 12. The result of this is that the annular channel 26 is divided at this point into two sections in the circumferential direction, each of the chambers 36 and 38 being connected to one section each. It is possible to arrange in the chambers 36 and 38 propellant charges or detonating pills which are connected through corresponding openings in the detonator housing 32 to an electric or electronic control device for firing the detonator pills.

Figure 2 shows a cross section through the gas distributor, shown in Figure 1, of the airbag module according to the invention. Constructed between the side walls 16 and 22 of the first and second cup-shaped elements 12 and 18 is an annular channel 26 in which two slides 28, 42 are movably arranged. To be seen on the right-hand side in Figure 2 are two through-openings 30 and 46 which extend through the side walls 16 and 22 and form a first flow path for connection to an airbag. The opening 46 is thereby formed in side walls 16 ad 22 in the same manner as opening 30. Arranged in the annular channel 26 between the two openings 30 and 46 is a stop element 48 against which the slides 28 and 42 strike when they seal the openings 46 and 30. The stop element is merely constructed as as narrow web reducing the flow passage formed by openings 30 and 46 only by a minimum extend. On the left in Figure 2, the gas distributor 10 has two further through-openings 50 and 52 which, in turn, extend through the two side walls 16 and 22 and which are essentially formed in the same manner as openings 30 and 46. As is illustrated in Figure 2, openings 30, 46, 50, 52 commonly extend over approximately the total circumference of the gas distributor so that, except for narrow connecting webs and the region of the detonator housing, approximately the total circumference of the gas distributor is used as flow passage. In the state shown in Figure 2, that is to say the initial state, the slides 28 and 42 are situated in the annular channel 26 in such a way that they seal the openings 50 and 52. The openings 50 and 52 are directed into the environment of the gas generator, preferably in the direction of the dashboard, in order to lead off into the environment gas which is not used to fill the airbag. The gas distributor 2 is additionally surrounded by an airbag housing 54 which extends around the side of the gas distributor 2 in which the openings 50 and 52 are provided. In this case, the housing 54 likewise has openings 51 and 53 at the location of the openings 50 and 52, with the result that the openings 50 and 52 are connected to the environment without obstruction. Toward the other side, the housing 54 is open and constructed with connection or fastening of an airbag (not shown here). Furthermore, the detonator housing 32 is fitted on the side of the gas distributor 10 on which the housing 54 extends. As is to be seen, the detonator housing 32 embraces the side walls 16 and 22 with the annular channel 26 situated therebetween. Only one of the chambers 36 for the propellant charge may be recognized in Figure 2. As is to be seen, the detonator housing 36 is arranged on the side wall 22 of the first cup-shaped element 12, which forms the outer wall of the gas distributor 10, in such a way that it comes to lie precisely over the cut-out 34. The chamber 36 is therefore connected to the annular channel 26. The partition 40 extends into the annular channel 26 in such a way that it comes to bear against the outside of the side wall 22 and therefore divides the annular channel 26 into two regions in the circumferential direction starting from the position of the detonator housing 32. The chamber 36 shown here is connected to the region of the annular channel 26 in which the slide 28 is located. Consequently, when a propellant charge in the chamber 36 is detonated and, on this basis, the internal pressure in this chamber rises, this pressure is introduced into the annular channel 26 and acts on the rear end face of the slide 28. A force therefore acts on the slide 28 and moves the latter into a second position, in which it seals the opening 30. In this state, the slide 28 strikes against the stop element 48, with the result that it cannot move out beyond the position sealing the opening 30. At the same time, the opening 52 previously sealed by the slide 28 is opened, with the result that instead of flowing through the opening 30 into the airbag, the gas flows through the opening 52 into the environment. In this case, the opening 52 and the opening 30 have approximately the same cross section and so there is no change in the total flow cross section owing to the movement of the slide 28. A rise in pressure in the gas distributor 10 can be prevented in this way.

It is also advantageous to arrange a locking device (not shown here) in the region of the opening 30 so that the slide 28 cannot move back again into its initial position from the opening 30 so that the opening 30 would be cleared again and the opening 52 sealed again. Such a locking device can be constructed, for example, as a clamping device in such a form that the two side walls 16 and 22 approach one another in the direction of movement of the slide 28 to the stop element 48, that is to say the annular channel narrows in this direction, so that the slide 28 is jammed between the side walls 16 and 22.

The chamber 38 (not shown in Figure 2) of the detonator housing 32 is connected to the part of the annular channel 26 in which the slide 42 lies, with the result that upon detonation of a propellant charge arranged in the chamber 38 the slide 42 is moved into the region of the opening 46 until it comes to bear against the stop 48. In this position, the slide 42 seals the opening 46, while at the same time the previously sealed opening 50 is open. Gas introduced by the gas generator 2 into the gas distributor 10 through the gas outlet device 4 does not now flow through the opening 46 into an airbag, but is led off through the opening 50, which is now open, into the environment, that is to say advantageously into the dashboard. In this case, the opening 50 is approximately the same size here too as the opening 46, with the result that the total flow cross section is essentially constant irrespective of the position of the slide 42. It is thus possible at any point in time to achieve complete outflow of the gas from the gas generator. Consequently, there can be no dangerous rise in the internal pressure in the gas generator 2 and the gas distributor 10 on the basis of a change in the position of the slide 42.

A locking device such as the previously described clamping device can be provided here, as well. In addition to this locking possibility, there is also the possibility of providing latching elements by means of which the slides are latched.

A very flexible control of the filling level of an airbag with gas can be achieved by the arrangement of two slides 28 and 42 and two differently sized pairs of openings 30, 52 and 46, 50. Depending on the position adopted by a vehicle occupant in relation to the airbag to be filled or to another external parameter, either both openings 30 and 46 can be opened for filling the airbag, or only the opening 30 or the opening 46 can be opened, depending on which quantity or mass of gas is to be introduced into the airbag. If the airbag is not to be filled at all, the two openings 30, 46 can be closed by the slides 28, 42, with the result that virtually no gas flows into the airbag. In this case, the gas not flowing into the airbag is led off into the environment via the openings 50 and 52, which are then respectively automatically opened. In this case, the slides 28, 42 can be moved independently of one another on the basis of the two propellant charges, which are provided in the chambers 36, 38 and can be detonated independently of one another.

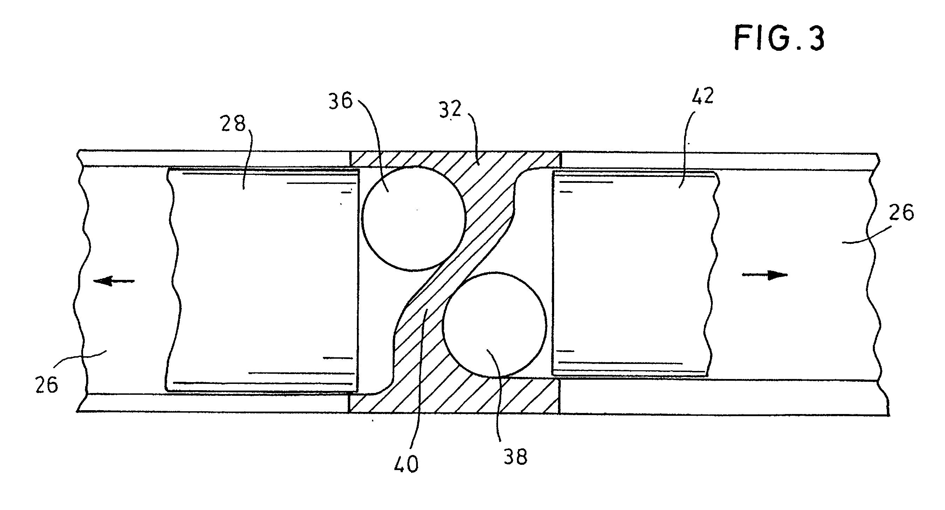

Figure 3 shows a section along the line B-B, which illustrates the arrangement of the two chambers 38 and 36 in the detonator housing 32. In order to permit as compact as possible a configuration of the gas distributor, in particular in the direction of the height, it is not desired to arrange the chambers 36 and 38 completely one above another, for which reason the chambers 36, 38 are arranged slightly offset relative to one another and separated from one another by the snaking partition 40. The chambers 36 and 38 are essentially circular, but widen toward the annular channel 26. It is therefore possible for a pressure produced in the chambers 36 and 38 to act on the whole end face of the respective slide 28, 42. In the initial position, the slide 28 and 42 bear directly against the chambers 36 and 38 in the region of the detonator housing 32. Upon detonation of a propellant charge in one of the chambers 36, 38, the slide connected to the respective chamber is moved from this initial position into the previously described second position.

The gas distributor 10 shown here, that is to say the cup-shaped elements 12 and 16, are constructed in this case as deep-drawn, sheet-metal parts. However, this part can also be fabricated as a casting made from metal or, for example, from plastic. The detonator housing 32 is preferably fabricated from steel and placed against the elements 12 and 16 and connected to the latter by means of an interference fit, for example, or else by welding, for example. Even if the detonator housing is represented as one piece in part of these simplified representations, it is still also possible for this housing to be constructed in several parts for reasons of production engineering. This housing can preferably be produced from steel, but also from other metals such as, for example, aluminum or as a plastic component.

### List of Reference Numerals

- 2: gas generator
- 4: gas outlet device
- 6: outlet openings
- 8: fastening bolt
- 10: gas distributor
- 12: first cup-shaped element
- 14: through-hole
- 16: side wall
- 18: second cup-shaped element
- 20: hole
- 22: side wall
- 24: free edge
- 26: annular channel
- 28: slide
- 30: opening
- 31a: lateral edge of the slide
- 31b: lateral edge of the slide
- 32: detonator housing
- 34: cut-out
- 36: chamber
- 38: chamber
- 40: partition
- 42: slide
- 46: opening
- 48: stop element
- 50: opening
- 51: opening
- 52: opening
- 53: opening
- 54: airbag housing

## Claims

1. An airbag module with a cup-shaped gas distributor (10) arranged annularly around a gas outlet device (4) of a gas generator (2), in which
at least a first (30; 46) and a second (52; 50) flow path for a gas are provided in the gas distributor (10),
the first flow path (30; 46) connects the gas generator (2) to an airbag,
the second flow path (52; 50) is not connected to the airbag,
the gas distributor (10) having an annular channel (26) which is arranged concentrically with the gas outlet device (4) in which an arcuate, movable slide (28, 42) is guided,
and the flow paths (30, 52; 46, 50) are constructed as openings which extend transverse to the direction of movement of the slide (28; 42) through the annular channel (26).

2. The airbag module as claimed in claim 1, in which the second flow path (52; 50) connects the gas generator (2) to at least one outflow opening (52; 50).

3. The airbag module as claimed in claim 1 or 2, in which the opening of the first flow path (30; 46) has approximately the same cross-section than the opening of the second flow path (52; 50) so that the total flow cross section of the flow paths (30, 52; 46, 50) remains constant in each position of the slides (28; 42).

4. The airbag module as claimed in any one of the preceding claims, in which a propellant charge is arranged in such a way that the slide (28; 42) can be moved from its first into its second position by detonating the propellant charge.

5. The airbag module as claimed in any one of the preceding claims, in which the slide (28; 42) is guided in a guiding device (16, 22) in a sliding fashion and the guiding device (16, 22) preferably has locking means for locking the slide (28; 42) in the region of a second position of the slide (28; 42).

6. The airbag module as claimed in any one of the preceding claims, in which two first (30, 46) and two second (52, 50) flow paths and two slides (28, 42) are arranged, it being possible for the two slides (28, 42) to be moved, preferably independently of one another, in order in each case to close a first flow path (30, 46) and simultaneously to open a second flow path (52, 50).

7. The airbag module as claimed in any one of the preceding claims, in which at least one detonator housing (32), connected to the annular channel (26), for holding at least one propellant charge is arranged on the annular channel (26) behind the slide (28; 42) in the direction of movement.

8. The airbag module as claimed in any one of the preceding claims, in which the second flow path (52; 50) connects the gas generator (2) to a further airbag.

## Patentansprüche

1. Airbag-Modul mit einem ringförmig um eine Gasaustrittseinrichtung (4) eines Gasgenerators (2) herum angeordneten topfförmigen Gasverteiler (10), bei welchem
in dem Gasverteiler (10) zumindest ein erster (30; 46) und ein zweiter (52; 50) Strömungsweg für ein Gas vorgesehen sind,
der erste Strömungsweg (30; 46) den Gasgenerator (2) mit einem Luftsack verbindet,
der zweite Strömungsweg (52; 50) nicht mit dem Luftsack verbunden ist,
der Gasverteiler (10) konzentrisch zu der Gasaustrittseinrichtung (4) einen Ringkanal (26) aufweist, in dem ein gebogener, beweglicher Ventilschieber (28; 42) geführt ist und
die Strömungswege (30, 52; 46, 50) als Öffnungen ausgebildet sind, welche sich quer zu der Bewegungsrichtung des Schiebers (28; 42) durch den Ringkanal hindurch erstrecken.

2. Airbag-Modul nach Anspruch 1, bei welchem der zweite Strömungsweg (52; 50) den Gasgenerator (2) mit zumindest einer Abströmöffnung (52; 50) verbindet.

3. Airbag-Modul nach Anspruch 1 oder 2, bei welchem die Öffnung des ersten Strömungsweges (30; 46) ungefähr denselben Querschnitt wie die Öffnung des zweiten Strömungsweges (52; 50) aufweist,so daß der Gesamt-Strömungsquerschnitt der Strömungswege (30, 52; 46, 50) in jeder Stellung der Schieber (28; 42) konstant bleibt.

4. Airbag-Modul nach einem der vorangehenden Ansprüche, bei welchem eine Treibladung derart angeordnet ist, daß der Schieber (28; 42) durch Zünden der Treibladung aus seiner ersten in seine zweite Stellung bewegbar ist.

5. Airbag-Modul nach einem der vorangehenden Ansprüche, bei welchem der Schieber (28; 42) in einer Führungseinrichtung (16; 22) gleitend geführt ist und die Führungseinrichtung (16; 22) im Bereich der zweiten Stellung des Schiebers (28; 42) vorzugsweise Arretiermittel zum Arretieren des Schiebers (28; 42) aufweist.

6. Airbag-Modul nach einem der vorangehenden Ansprüche, bei welchem zwei erste (30, 46) und zwei zweite (52, 50) Strömungswege sowie zwei Schieber (28, 42) angeordnet sind, wobei es für die beiden Schieber (28, 42) möglich ist, vorzugsweise unabhängig voneinander bewegt zu werden, um in jedem Fall einen ersten Strömungsweg (30, 46) zu schließen und gleichzeitig einen zweiten Strömungsweg (52, 50) zu öffnen.

7. Airbag-Modul nach einem der vorangehenden Ansprüche, bei welchem an dem Ringkanal (26) in Bewegungsrichtung hinter dem Schieber (28; 42) wenigstens ein mit dem Ringkanal (26) verbundenes Zündergehäuse (32) zur Aufnahme zumindest einer Treibladung angeordnet ist.

8. Airbag-Modul nach einem der vorangehenden Ansprüche, bei welchem der zweite Strömungsweg (52; 50) den Gasgenerator (2) mit einem weiteren Luftsack verbindet.

## Revendications

1. Module de coussin d'air comportant un distributeur de gaz en entonnoir (10) agencé de maniére annulaire autour d'un dispositif de sortie du gaz (4) d'un générateur de gaz (2), dans lequel au moins une première (30; 46) et une deuxième (52; 50) trajectoires d'écoulement de gaz sont établies dans le distributeur de gaz (10),
la première trajectoire d'écoulement du gaz (30; 46) reliant le générateur de gaz (2) à un coussin d'air, la deuxième trajectoire d'écoulement du gaz (52; 50) n'étant pas reliée au coussin d'air,
le distributeur de gaz (10) comportant un canal annulaire (26) agencé de manière concentrique au dispositif de sortie du gaz (4) dans lequel est guidé un coulisseau de soupape arqué mobile (28, 42),
les trajectoires d'écoulement (30, 52; 46, 50) ayant la forme d'ouvertures s'étendant transversalement à la direction de déplacement du coulisseau (28; 42) à travers le canal annulaire (26).

2. Module de coussin d'air selon la revendication 1, dans lequel la deuxième trajectoire d'écoulement (52; 50) relie le générateur de gaz (2) à au moins une ouverture d'échappement (52; 50).

3. Module de cousin d'air selon les revendications 1 ou 2, dans lequel l'ouverture de la première trajectoire d'écoulement (30; 46) a pratiquement la même section transversale que l'ouverture de la deuxième trajectoire d'écoulement (52; 50), de sorte que la section transversale d'écoulement globale des trajectoires d'écoulement (30, 52; 46, 50) reste constante dans chaque position des coulisseaux (28; 42).

4. Module de coussin d'air selon l'une quelconque des revendications précédentes, dans lequel une charge propulsive est agencée de sorte que le coulisseau (28; 42) peut être déplacé de sa première position dans sa deuxième position par la détonation de la charge propulsive.

5. Module de cousin d'air selon l'une quelconque des revendications précédentes, dans lequel le coulisseau (28; 42) est guidé dans un dispositif de guidage (16, 22) par glissement, le dispositif de guidage (16, 22) comportant de préférence un moyen de blocage pour bloquer le coulisseau (28; 42) dans la région d'une deuxième position du coulisseau (28; 42).

6. Module de coussin d'air selon l'une quelconque des revendications précédentes, comportant deux premières (30, 46) et deux deuxièmes (52, 50) trajectoires d'écoulement et deux coulisseaux (28, 42), les deux coulisseaux (28, 42) pouvant être déplacés, de préférence de manière indépendante, pour fermer dans chaque cas une première trajectoire d'écoulement (30, 46) et ouvrir simultanément une deuxième trajectoire d'écoulement (52, 50).

7. Module de coussin d'air selon l'une quelconque des revendications précédentes, dans lequel au moins un boîtier de détonateur (32), raccordé au canal annulaire (26), destiné à contenir au moins une charge propulsive, est agencé sur le canal annulaire (26) derrière le coulisseau (28; 42), dans la direction du déplacement.

8. Module de coussin d'air selon l'une quelconque des revendications précédentes, dans lequel la deuxième trajectoire d'écoulement (52; 50) relie le générateur de gaz (2) à un coussin d'air additionnel.
